# EUROPÄISCHE PATENTSCHRIFT

(11) **EP 0 615 518 B1**
(45) Veröffentlichungstag und Bekanntmachung des Hinweises auf die Patenterteilung: **05.07.1995**
(21) Anmeldenummer: 92924649.4
(22) Anmeldetag: 02.12.1992
(51) Int. Cl.: C04B 18/06

(54) **VERFAHREN ZUR VERWERTUNG VON BRAUNKOHLENFLUGASCHE**
METHOD OF PROCESSING LIGNITE FLY-ASH
PROCEDE POUR L'UTILISATION DE CENDRES VOLANTES DE LIGNITE

(30) Priorität: 02.12.1991 DE 4139644
(43) Veröffentlichungstag der Anmeldung: 21.09.1994
(73) Patentinhaber: SICOWA Verfahrenstechnik für Baustoffe GmbH & Co. KG, D-52072 Aachen (DE)
(72) Erfinder: KOSLOWSKI, Thomas, D-5100 Aachen (DE)
(74) Vertreter: Sparing - Röhl - Henseler Patentanwälte
(86) Internationale Anmeldenummer: EP9202788
(87) Internationale Veröffentlichungsnummer: WO9311083

(56) Entgegenhaltungen:
- DD-A- 242 609
- DE-A- 3 028 245
- GB-A- 2 061 241
- US-A- 4 214 911

## Beschreibung

Die Erfindung betrifft ein Verfahren zur Verwertung von Braunkohlenasche, insbesondere trocken anfallender Elektrofilterasche, zu Baustoffen.

Durch die Art des Brennstoffs und durch Unterschiede im Verfeuerungsprozeß sind Steinkohlen- und Braunkohlenaschen nicht nur in der generellen chemisch-mineralogischen Zusammensetzung verschieden, sondern auch in ihrer Struktur. Etwa glasartig geschmolzene Anteile, wie sie bei Steinkohlenaschen aus im Mittel- und im Hochtemperaturbereich verfeuerter Steinkohle in relativ großer Menge auftreten, sind bei Braunkohlenaschen in wesentlich geringerem Umfang anzutreffen.

Da Braunkohlenaschen in erheblichen Mengen anfallen, hat man verschiedene Versuche unternommen, diese zu verwerten, um ein Abkippen auf Deponien zu vermeiden. So ist es bekannt, Braunkohlenaschen in Verbindung mit dem ebenfalls anfallenden Braunkohlen-Rauchgasentschwefelungsgips als Stabilisat zur umweltneutralen Auffüllung von Gruben und Tagebauen einzusetzen.

Die Verwendung von Braunkohlenflugaschen, die im rheinischen Braunkohlenrevier in einer Menge von ca. 5 Mill. t/a anfallen, bei der Herstellung von Kalksandsteinen hat sich dagegen als völlig ungeeignet herausgestellt, wie U. Wittneben, "Möglichkeiten zur Reduzierung des Kalk- und Energiebedarfs bei der Kalksandsteinherstellung durch den Zusatz von Flugasche", Bundesverband Kalksandsteinindustrie eV, 1987, insbesondere Darstellung 2, zu entnehmen ist.

Zwar ist in der DE-A-4 039 091 auch die Verwendung von Braunkohlenflugasche bei der Herstellung von Kalksandsteinen unter Erzielung von relativ guten Festigkeitswerten bekannt, jedoch handelt es sich bei dieser Asche um eine an Freikalk sehr reiche Asche, die dadurch ein entsprechendes chemisches Bindevermögen mit sich bringt. Eine derartige Asche fällt jedoch nur in sehr geringen Mengen an, so daß sich hierdurch keine wesentliche Reduzierung der zu deponierenden Braunkohlenaschenmengen erreichen läßt.

Aufgabe der Erfindung ist es, ein Verfahren der eingangs genannten Art zu schaffen, das es ermöglicht, Braunkohlenaschen in großer Menge zur Herstellung hochwertiger Baustoffe zu verwenden.

Diese Aufgabe wird dadurch gelöst, daß zunächst eine Grobfraktion (II) mit einer Korngrößenuntergrenze im Bereich von etwa 200 bis 500 »m mechanisch abgetrennt, die verbleibende Fraktion (I) mit entsprechender Korngrößenobergrenze als solche oder deren Feinstfraktion (III) mit Anteilen mit einer Korngrößenobergrenze im Bereich von etwa 40 bis 100 »m, die mechanisch von einer im wesentlichen Feinquarzsand enthaltenen Feinfraktion IV) abgetrennt wird, zur Herstellung von Ziegeleiprodukten verwendet wird, während die Feinfraktion (IV) zur Herstellung von Quarzsand benötigenden Baustoffen eingesetzt wird, wobei gegebenenfalls mechanisch zumindest die überwiegende Menge der in den so verwendeten Fraktionen (I, III, IV) noch enthaltenen Kohle-, Koks- und Holzpartikel entfernt werden.

Weitere Ausgestaltungen der Erfindung sind der nachfolgenden Beschreibung und den Unteransprüchen zu entnehmen.

Die Erfindung wird nachstehend anhand der beigefügten Abbildungen näher erläutert.

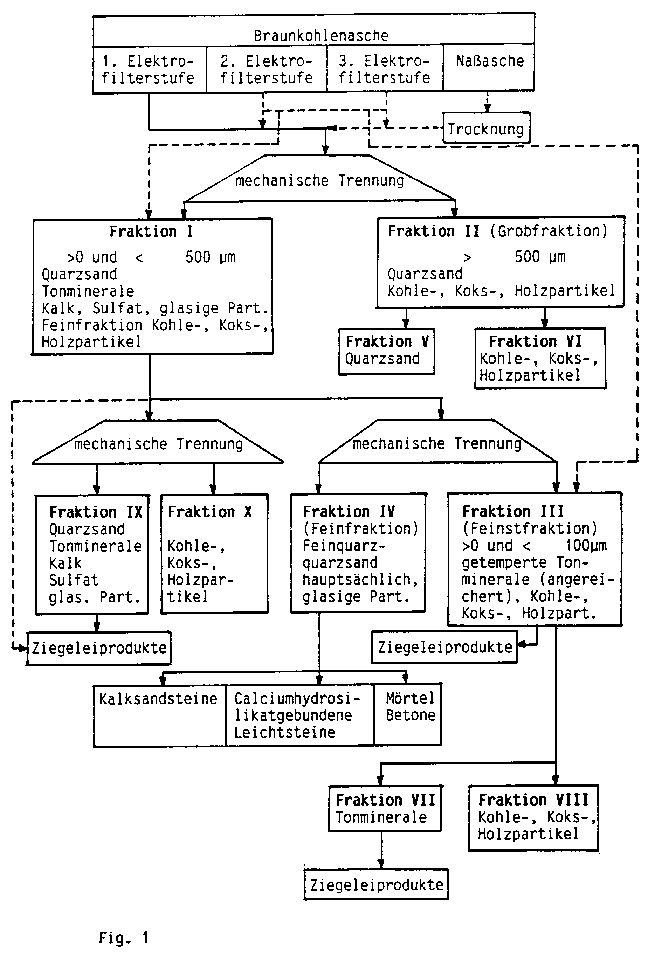

Fig. 1 zeigt ein Flußdiagramm bezüglich der Verwertung von Braunkohlenasche.

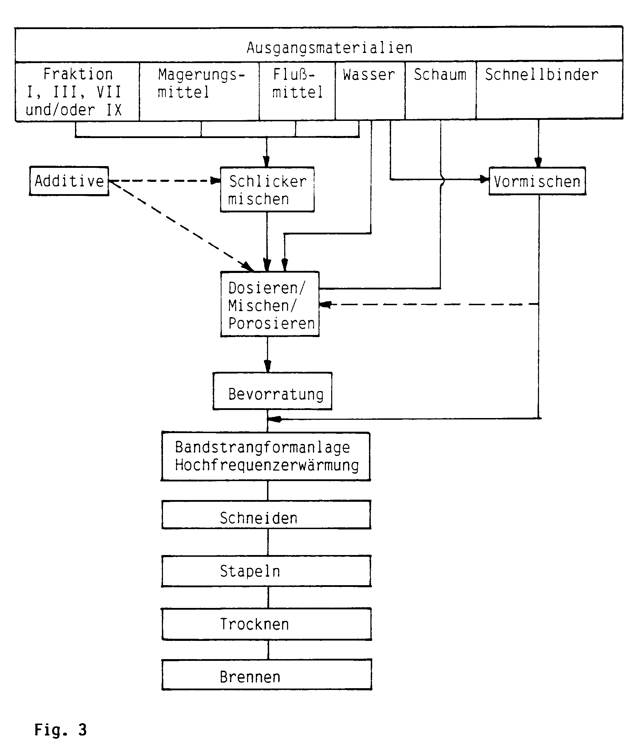

Fig. 2 bis 5 zeigen Flußdiagramme bezüglich der Verwertung bestimmter Fraktionen aus dem Flußdiagramm von Fig. 1.

Braunkohlenasche fällt allgemein größtenteils als trockene Elektrofilterasche und zu einem geringeren Teil als Naßasche an. Elektrofilterasche aus der ersten Elektrofilterstufe (etwa 90 Gew.-% der Elektrofilterasche) enthält vor allem auch die grobkörnigeren Aschebestandteile, während die Elektrofilterasche einer zweiten und gegebenenfalls einer dritten Elektrofilterstufe sehr feinteilig sind.

Elektrofilterasche enthält Quarzsand, getemperte Tonminerale, die im allgemeine beide zusammen etwa 70 bis 90 Gew.-% ausmachen, sowie Anteile an Kalk, Sulfat, sonstige aluminatische und ferritische Anteile und glasige Partikel zusammen mit Kohle-, Koks- und Holzpartikeln.

Die Fein- und Feinstanteile mit einer Korngrößenobergrenze etwa < 500 »m, vorzugsweise etwa < 300 »m, insbesondere etwa < 200-250 »m werden in einem ersten Schritt als Fraktion I mechanisch von einer Fraktion II mit Teilchen einer Körngrößenuntergrenze etwa > 500 »m, vorzugsweise etwa > 300 »m und insbesondere etwa > 200-250 »m, enthaltend vor allem gröberen Quarzsand und gröbere Kohle-, Koks- und Holzpartikel abgetrennt, insbesondere abgesiebt und enthalten infolge der Trennung im Bereich bis zu der angegebenen Korngröße vor allem Feinquarzsand und tonmineralische sowie ferner sonstige aluminatische, ferritische, kalkhaltige und sulfatische Bestandteile, außerdem eine Feinfraktion von Kohle-, Koks- und Holzpartikeln. Insbesondere wird nur die Braunkohlenflugasche aus einer ersten Elektrofilterstufe der Trennung unterworfen und die dabei abgetrennte Fraktion I gegebenenfalls zusammen mit der in weiteren Elektrofilterstufen anfallenden Braunkohlenflugasche, die im allgemeinen im wesentlichen vor allem aus feinstteiligen tonmineralischen Bestandteilen bestehen, verarbeitet.

Die Fraktion I wird einer weiteren mechanischen Trennung unterworfen, die sich danach richtet, welche Verwertung der dann erhaltenen Fraktionen geplant ist.

Im allgemeinen erfolgt eine weitere mechanische Trennung etwa durch Sieben oder Sichten in eine Fraktion III (Feinstfraktion) mit einer Korngrößenobergrenze < etwa 100 »m, insbesondere < etwa 40-70 »m und eine Fraktion IV (Feinfraktion) mit einer Korngrößenuntergrenze > etwa 100 »m, insbesondere > etwa 40-70 »m. Die Fraktion III enthält hauptsächlich getemperte Tonminerale sowie neben kleinen Anteilen der weiter oben aufgeführten Bestandteile auch noch in geringen Mengen Feinstanteile an Kohle-, Koks- und Holzpartikeln, die gegebenenfalls zum Erhalt einer Fraktion VII praktisch aus getemperten Tonmineralen und einer Fraktion VIII aus brennbaren Reststoffen abgetrennt werden können, und läßt sich daher als solche oder in Form der Fraktion VII für Ziegeleiprodukte verwenden. Die Fraktion III enthält insbesondere im wesentlichen die braun färbenden Anteile.

Gegebenenfalls kann man die Elektrofilterasche der zweiten und gegebenenfalls weiteren Elektrofilterstufen der Fraktion III beimischen und mit dieser weiter verarbeiten, da diese hauptsächlich feinstteilige getemperte Tonminerale enthalten.

Die Fraktion IV, die hauptsächlich entsprechenden Quarzsand und einen geringen Anteil der übrigen Substanzen der Fraktion I enthält, aber im wesentlichen frei von Tonmineralen ist, eignet sich insbesondere zur Verwendung bei der Herstellung von calciumhydrosilikatgebundenen Baustoffen wie Kalksandsteine, Porenbetonsteine o.dgl., da bei dem auf diese Weise gewonnenen Quarzsand die Kieselsäure für eine Calciumhydrosilikatbildung beim Autoklavieren entsprechend aktiviert ist, so daß sich im Vergleich mit normalem Quarzsand aus einer Lagerstätte kürzere Autoklavierzeiten ergeben und/oder geringere Drücke verwenden lassen.

Wenn die Fraktion IV bevorzugt durch Sichten erhalten wurde, ist der Gehalt an Kohle-, Koks- und Holzpartikeln im allgemeinen so gering, daß diese Fraktion als solche verwendet werden kann. Wenn dieser Gehalt jedoch höher ist, sind diese Partikel beispielsweise durch Sichten abzutrennen.

Von der verbleibenden Fraktion II wird das brennbare Material insbesondere durch Sichten, vorzugsweise Windsichten, abgetrennt, es können aber auch andere Trennverfahren, die zweckmäßigerweise den großen Unterschied im spezifischen Gewicht zwischen den Kohle-, Koks- und Holzpartikeln und den anderen Bestandteilen der Fraktion II ausnutzen, verwendet werden. Die so erhaltene Fraktion V besteht im wesentlichen aus Quarzsand. Die weitere anfallende Fraktion VI besteht aus brennbarem Material und kann gegebenenfalls in den Verbrennungskreislauf zurückgeführt werden.

Deshalb läßt sich der so erhaltene Quarzsand der Fraktion V ebenso wie derjenige der Fraktion IV zur Herstellung von calciumhydrosilikatgebundenen Formkörpern wie Kalksandsteinen o.dgl. verwenden. Zur Herstellung von letzteren wird Quarzsand, Kalk und Wasser miteinander gemischt, die Mischung nach Ablöschen in einem Reaktor auf einer Kalksandsteinpresse mit einem Druck in der Größenordnung von 15 bis 20 N/mm² und mehr zu Formkörpern gepreßt und die Formkörper unter Sattdampf bei einer Temperatur bis etwa 200°C während 3 bis 8h autoklaviert. Hierdurch lassen sich weißliche bisleicht graue Formkörper, beispielsweise Mauersteine, als Vollstein oder als Kammerstein mit Lochmuster herstellen, ohne daß natürliche Quarzsandlagerstätten angegriffen werden müssen bzw. ein Abkippen auf Deponien erfolgen muß, gleichzeitig aber energetisch günstiger (kürzere Autoklavierzeiten und/oder geringe Drücke) als bei der üblichen Kalksandsteinindustrie gearbeitet werden kann.

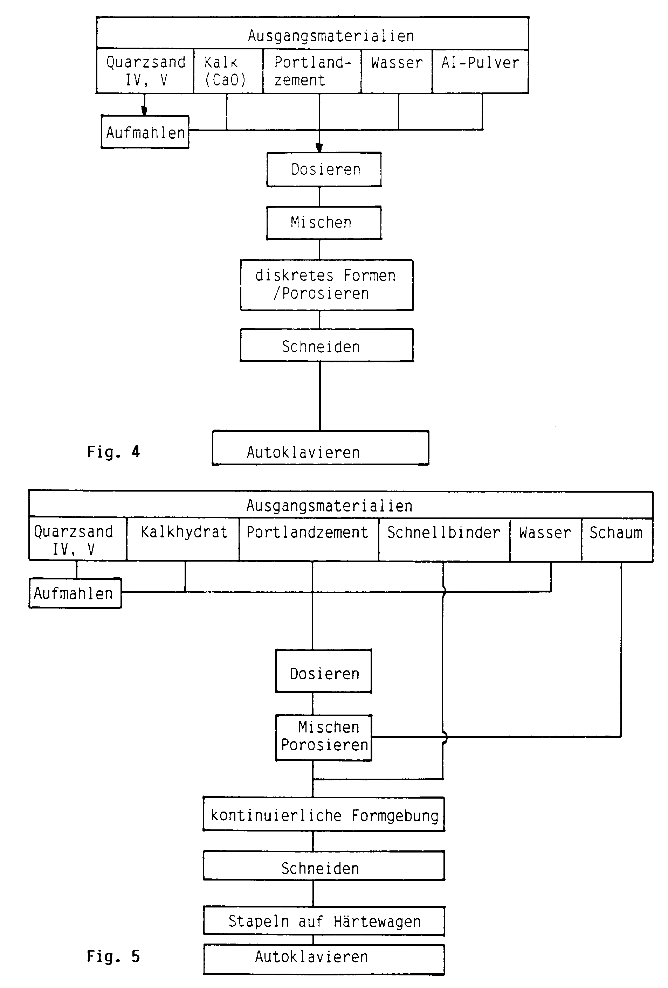

Auch calciumhydrosilikatgebundene Leichtbaustoffe lassen sich aus dem gewonnenen und aufgemahlenen Quarzsand herstellen, vgl. Fig. 4 und 5. So kann gemäß Fig. 4 Porenbeton aus aufgemahlenem Quarzsand, Kalk (CaO), Portlandzement, Wasser und einem Gasabspalter (Al-Pulver) hergestellt werden, wobei die Ausgangsmaterialien dosiert sowie gemischt werden und die Mischung in Formen gefüllt wird, wobei in der Mischung durch den Gasabspalter Gasbläschen erzeugt werden, die die Mischung porosieren. Anschließend erfolgt ein Schneiden des verfestigten porosierten Kuchens und ein Autoklavieren mit anschließendem Stapeln, Lagern und Verpacken.

Gemäß Fig. 5 können calciumhydrosilikatgebundene Leichtbaustoffe aus dem gewonnenen und gemahlenen Quarzsand, Kalkhydrat, Portlandzement, Wasser, Schaum und einem Schnellbinder hergestellt werden, bei denen ein vorgefertigter Schaum, etwa ein Tensidschaum, der aus Quarzsand, Portlandzement, Kalkhydrat und Wasser bestehenden Rohmischung beigemischt wird und die zur Handhabung, Stapelung und zum Einbringen in einen Autoklaven notwendige Rohlingsfestigkeit über einen speziellen anorganischen, der Rohmischung insbesondere kurz vor der Formgebung zugemischten, wärmeaktivierbaren Schnellbinder (z.B. gemäß EP-B-0 119 662 oder 0 151 452, der beispielsweise aus Tonerdezement, Zitronensäureanhydrit, Stuckgips und Gipsanhydrit in Gegenwart von Kalkhydrat besteht) erzielt wird. Die Rohmischung wird in einer Stranggießanlage kontinuierlich zu einem Strang geformt und dabei einer Wärmebehandlung etwa in einem Hochfrequenzfeld unterworfen. Nach einem Schneiden der Rohlinge erfolgt ein Autoklavieren, Stapeln, Lagern und Verpacken.

Der Quarzsand läßt sich aber auch zusammen mit Zement zu Leichtbaustoffen wie Formkörper aus Porenbeton, bei denen die Porosität durch Beimischen eines vorgefertigten Schaums, etwa eines Tensid- oder Proteinschaums, verarbeiten, wobei die aus der Ausgangsmischung erzeugten Rohlinge ebenfalls mit den bereits vorstehend beschriebenen Vorteilen autoklaviert werden.

Gegebenenfalls können die vorstehend aufgeführten, aus dem gewonnenen Quarzsand herstellbaren Produkte auch beispielsweise rot gefärbt sein, was durch Zumischen von Rotschlamm aus der Aluminiumgewinnung, vorzugsweise in einer Menge von 1 bis 5 Gew.-%, zur Rohmischung, oder anderen stark färbenden, mineralischen Zusätzen erreicht werden kann.

Der gewonnene Quarzsand wird je nach gewünschter Rohdichte der Leichtbaustoffe auf eine Mahlfeinheit mit einer spez. Oberfläche von etwa 1500 bis 4000 cm²/g nach Blaine aufgemahlen.

Ferner läßt sich dieser Quarzsand baustoffseitig als Feinsand für Mörtel, Putze, Betone u.dgl. oder aber als Gießereiformsand verwenden, wobei ein Trocknen des Sandes, wie es bei Sanden aus natürlichen Lagerstätten notwendig ist, die üblicherweise erdfeucht sind, d.h. eine Feuchtigkeit bis ca. 5 Gew.-% aufweisen, entfällt.

Die Trennung der Fraktion I kann aber auch beispielsweise durch Sichten derart vorgenommen werden, daß im wesentlichen die Kohle-, Koks- und Holzpartikel als beispielsweise verfeuerbare Fraktion X entfernt werden und eine Fraktion IX übrig bleibt, die im wesentlichen aus Quarzsand und Tonmineralen besteht. Die Fraktion IX kann ebenfalls für Ziegeleiprodukte eingesetzt werden.

Hier kommen konventionelle Ziegeleiprodukte wie Hintermauerziegel, Klinker, Pflastersteine u.dgl., wofür sich insbesondere die Fraktionen I bzw. IX eignen, die Fraktionen III und VII jedoch nicht ausgeschlossen sind, sowie porosierte Leichtziegel, die insbesondere aus den Fraktionen III und VII hergestellt werden, infrage. Gegebenenfalls werden auch Mischungen dieser Fraktionen eingesetzt.

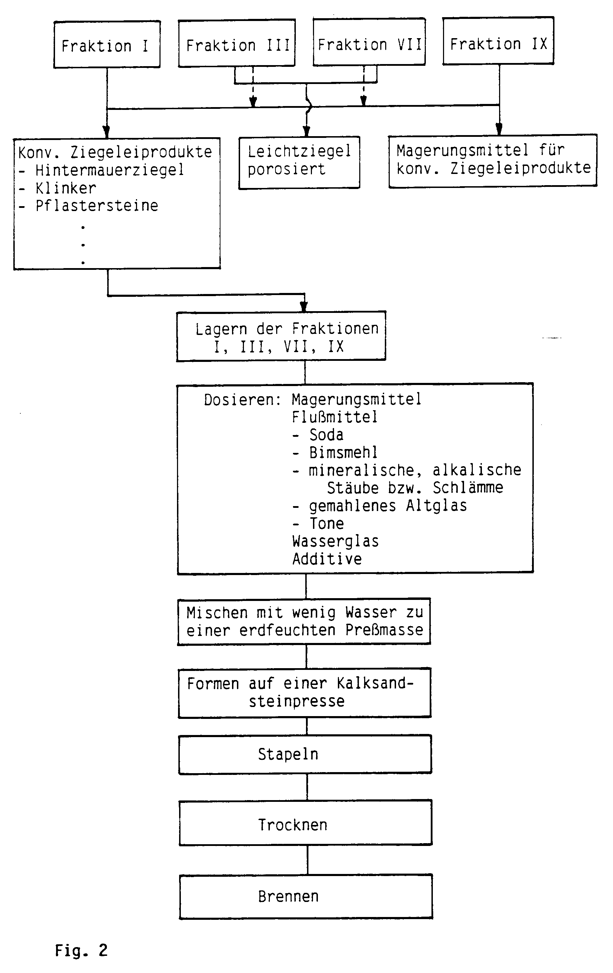

Zur Herstellung von Rohlingen für konventionelle Ziegelprodukte, die üblicherweise durch Kneten und Strangpressen hergestellt werden, kann entsprechend Fig. 2 nach Dosieren und Mischen mit Magerungsmittel (Sande, Schlacken), eventuellen Additiven und Flußmittel (deren Alkaligehalt eine geringere notwendige Brenntemperatur bedingt und die als etwa 1 bis 2 Gew.-% Soda, bis etwa 10 Gew.-% Bimsmehl, alkalireiche mineralische Stäube bzw. Schlämme (z.B. der vorgenannte Rotschlamm oder Schleifschlämme) bis zu etwa 10 Gew.-%, bis etwa 10 Gew.-% gemahlenes Altglas und bis etwa 10 Gew.-% Tone, gegebenenfalls auch in Mischung zugegeben) durch Zugabe von etwa 5 bis 7 Gew.-% Feuchte eine erdfeuchte Preßmasse erzeugt werden, die durch anschließendes portionsweises Verpressen auf einer Presse wie einer Kalksandsteinpresse, d.h. mit Preßdrücken in der Größenordnung von 15 bis 20 N/mm² und mehr, zu eigenstabilen Rohlingen geformt und dann gebrannt werden. Hierbei können Ziegel wie Kalksandsteine als Vollsteine oder als Kammersteine mit entsprechenden Lochmuster versehen werden.

Vor dem Brennen werden die Rohlinge getrocknet, wobei puzzolanische Anteile der Braunkohlenasche, die in der erdfeuchten Umgebung mit ebenfalls in geringen Mengen vorhandenem Kalk festigkeitsbildend reagieren, dazu beitragen, daß die Rohlinge nicht zerfallen. Da derartige puzzolanische Anteile in geringen Mengen normalerweise vorhanden sind, ist im allgemeinen kein Klebemittel notwendig. Gegebenenfalls kann jedoch auch etwa 1 bis 2 Gew.-% Wasserglas als Klebemittel zugesetzt werden.

Vor allem bietet sich hier die Möglichkeit, Altglas zu verwerten, das entsprechend gemahlen als Flußmittel eingesetzt werden kann.

Es lassen sich aber auch entsprechende porosierte Leichtbaustoffe, etwa Leichtziegel, herstellen, indem nach Mischen eines Schlickers aus der Fraktion I, III, VII und/oder IX, Magerungsmittel, gegebenenfalls Flußmittel und Wasser zusätzlich Wasser und ein vorgefertigter Tensid- oder Proteinschaum zugemischt und damit die Rohmischung porosiert wird. Die Rohlingsstandfestigkeit wird durch Zumischen eines entsprechenden anorganischen, für Frühfestigkeit sorgenden, wärmeaktivierbaren Schnellbinders (wie oben erwähnt) zu der porosierten Rohmischung vor oder nach deren Bevorratung in einem entsprechenden Behälter bewirkt. Die Rohmischung wird dann in eine Bandstrangformanlage gegossen und während ihres Durchlaufs etwa durch Hochfrequenzerwärmung erwärmt, so daß der Schnellbinder aktiviert wird und der Strang erstarrt, der dann in eigenstabile Rohlinge zerschnitten wird, die gestapelt, getrocknet und gebrannt werden. Der Rohmischung oder dem Schlicker können eventuelle Zusatzmittel wie Verflüssiger o.dgl. zugesetzt werden.

Wegen fehlender Plastizität der getemperten Tonminerale der Fraktionen I, III, VII und IX tritt bei derartigen Ziegeleiprodukten im Gegensatz zu Produkten, die aus ungetemperten Tonen hergestellt werden, nur ein sehr geringes Schrumpfen auf, d.h. Brenn- und Trockenschwindung sind sehr gering, es ergeben sich scharfe Kanten und eine gute Maßhaltigkeit.

Die Fraktionen I, III, VII und IX lassen sich auch als Magerungsmittel für konventionelle Ziegeleiprodukte einsetzen.

Ferner lassen sich die Fraktionen VII und IX als Zusatzstoff mit puzzolanischer Wirkung in Kalk und Portlandzement enthaltenden Bindebaustoffen verwenden.

Außerdem lassen sich durch das Abtrennen der Feinstbestandteile und der Kohle-, Koks- und Holzpartikel etwa durch Sieben und Sichten Schwankungen in der Aschenzusammensetzung auffangen. Durch die Abtrennung und erneute Zuführung der Kohle-, Koks- und Holzpartikel zur Verbrennung ergibt sich eine entsprechend verbesserte Brennstoffausnutzung.

Die Naßasche kann nach Trocknung zusammen mit der Flugasche den vorgesehenen mechanischen Trennungen unterworfen werden.

## Patentansprüche

1. Verfahren zur Verwertung von Braunkohlenasche, insbesondere trocken anfallender Elektrofilterasche, zu Baustoffen, dadurch **gekennzeichnet**, daß zunächst eine Grobfraktion (II) mit einer Korngrößenuntergrenze im Bereich von etwa 200 bis 500 »m mechanisch abgetrennt, die verbleibende Fraktion (I) mit entsprechender Korngrößenobergrenze als solche oder deren Feinstfraktion (III) mit Anteilen mit einer Korngrößenobergrenze im Bereich von etwa 40 bis 100 »m, die mechanisch von einer im wesentlichen Feinquarzsand enthaltenen Feinfraktion (IV) abgetrennt wird, zur Herstellung von Ziegeleiprodukten verwendet wird, während die Feinfraktion (IV) zur Herstellung von Quarzsand benötigenden Baustoffen eingesetzt wird, wobei gegebenenfalls mechanisch zumindest die überwiegende Menge der in den so verwendeten Fraktionen (I, III, IV) noch enthaltenen Kohle-, Koks- und Holzpartikel entfernt werden.

2. Verfahren nach Anspruch 1, dadurch gekennzeichnet, daß die Grob-, Fein- und/oder Feinstfraktion (I, II, III, IV) durch Sieben hergestellt werden.

3. Verfahren nach Anspruch 1 oder 2, dadurch gekennzeichnet, daß die Fein- und die Feinstfraktion (III, IV) durch Sichten voneinander getrennt werden.

4. Verfahren nach einem der Ansprüche 1 bis 3, dadurch gekennzeichnet, daß die Kohle-, Koks- und Holzpartikel durch Sichten abgetrennt werden.

5. Verfahren nach einem der Ansprüche 1 bis 4, dadurch gekennzeichnet, daß die Grobfraktion (II) mit einer Korngrößenuntergrenze etwa > 350 »m, insbesondere etwa > 200 bis 250 »m abgetrennt wird.

6. Verfahren nach einem der Ansprüche 1 bis 5, dadurch gekennzeichnet, daß die Feinstfraktion (III) mit einer Korngrößenobergrenze von etwa 40 bis 70 »m abgetrennt wird.

7. Verfahren nach einem der Ansprüche 1 bis 6, dadurch gekennzeichnet, daß die Braunkohlenflugasche aus einer ersten Elektrofilterstufe der Trennung unterworfen und die dabei abgetrennte Feinstfraktion (111) zusammen mit der in weiteren Elektrofilterstufen anfallenden Braunkohlenflugasche verarbeitet wird.

8. Verfahren nach einem der Ansprüche 1 bis 7, dadurch gekennzeichnet, daß die von Kohle-, Koks- und Holzpartikeln im wesentlichen befreite Grob- und/oder Feinfraktion (II, IV) zusammen mit Kalk und/oder Zement unter Pressen von Formkörpern und Autoklavieren der Formkörper zu calciumhydrosilikatgebundenen Formkörpern verarbeitet wird.

9. Verfahren nach einem der Ansprüche 1 bis 7, dadurch gekennzeichnet, daß die von Kohle-, Koks- und Holzpartikeln im wesentlichen befreite Grob- und/oder Feinfraktion (II, IV) gemahlen zusammen mit Kalk bzw. Kalkhydrat und/oder Zement und einem vorgefertigten Schaum oder einem porenbildenden Mittel unter Autoklavieren zu Formkörpern aus Porenbeton bzw. zu Poren aufweisenden calciumhydrosilikatgebundenen Formkörpern verarbeitet wird.

10. Verfahren nach Anspruch 9, dadurch gekennzeichnet, daß durch Zumischen eines wärmeaktivierbaren, zur Erstarrung führenden Schnellbinders und Hindurchführen der gebildeten Rohmischung durch eine die Rohmischung erwärmende Bandstrangformanlage und anschließendes Durchtrennen des Strangs eigenstabile Rohlinge erzeugt werden.

11. Verfahren nach einem der Ansprüche 8 bis 10, dadurch gekennzeichnet, daß die mit der Grob- und/oder Feinfraktion (II, IV) gebildete, zu formende Masse mit einem mineralischen färbenden Zusatz, vorzugsweise in einer Menge von 1 bis 5 Gew.-%, eingefärbt wird.

12. Verfahren nach einem der Ansprüche 1 bis 7, dadurch gekennzeichnet, daß die von Kohle-, Koks- und Holzpartikeln im wesentlichen befreite Feinfraktion (IV) als Feinsand für Mörtel, Putze, Betone oder als Gießereiformsand eingesetzt wird.

13. Verfahren nach einem der Ansprüche 1 bis 7, dadurch gekennzeichnet, daß die verbleibende Fraktion (I) und/oder die Feinstfraktion (III), gegebenenfalls nach mechanischer Entfernung der Kohle-, Koks- und Holzpartikel, nach Anfeuchtung mit etwa 5 bis 7 Gew.-% Feuchte und Mischen mit zur Herstellung von Ziegeleiprodukten notwendigen Zusätzen durch Pressen zu Formkörpern geformt wird, die gebrannt werden.

14. Verfahren nach einem der Ansprüche 1 bis 7, dadurch gekennzeichnet, daß die aus der verbleibenden Fraktion (I) und/oder der Feinstfraktion (III) und aus zur Herstellung von Ziegeleiprodukten notwendigen Zusätzen hergestellte Mischung mit vorgefertigtem Schaum porosiert wird, aus der dann mittels eines wärmeaktivierbaren, zur Erstarrung führenden Schnellbinders in einer erwärmbaren Bandstrangformanlage ein Strang hergestellt wird, der in eigenstabile Rohlinge zerteilt wird, die gebrannt werden.

15. Verfahren nach Anspruch 13 oder 14, dadurch gekennzeichnet, daß der aus der verbleibenden Fraktion (I) und/oder der Feinstfraktion (III) und den Zusätzen hergestellten Mischung gemahlenes Altglas in einer Menge bis zu etwa 10 Gew.-% zugesetzt wird.

16. Verfahren nach einem der Ansprüche 1 bis 7, dadurch gekennzeichnet, daß die verbleibende Fraktion (I) und/oder die Feinstfraktion (III) nach Entfernung der Kohle-, Koks- und Holzbestandteile als Zusatzstoff mit puzzolanischer Wirkung in Kalk und Portlandzement haltigen Bindemitteln verwendet werden.

## Claims

1. Process for the exploitation of brown coal ash, in particular electrostatic precipitator ash arising in the dry state, to form building materials, characterized in that a coarse fraction (II) having a particle size lower limit in the range of about 200 to 500 »m is first mechanically separated off, the remaining fraction (I) having a corresponding particle size upper limit is used for the production of brickworks products as such or as the very fine fraction (III) thereof with contents having a particle size upper limit in the range of about 40 to 100 »m which is mechanically separated off from a fine fraction (IV) containing essentially fine quartz sand, while the fine fraction (IV) is used for the production of building materials requiring quartz sand, at least the majority of the coal particles, coke particles and wood particles still contained in the fractions (I, III, IV) so used being removed mechanically if necessary.

2. Process according to Claim 1, characterized in that the coarse fraction, fine fraction and/or very fine fraction (I, II, III, IV) are produced by sieving.

3. Process according to Claim 1 or 2, characterized in that the fine fraction and the very fine fraction (III, IV) are separated from each other by sifting.

4. Process according to one of Claims 1 to 3, characterized in that the coal particles, coke particles and wood particles are separated off by sifting.

5. Process according to one of Claims 1 to 4, characterized in that the coarse fraction (II) is separated off with a particle size lower limit about > 350 »m, in particular about > 200 to 250 »m.

6. Process according to one of Claims 1 to 5, characterized in that the very fine fraction (III) is separated off with a particle size upper limit about < 40 to 70 »m.

7. Process according to one of Claims 1 to 6, characterized in that the brown coal fly ash from a first electrostatic precipitator stage is subjected to the separation and the very fine fraction (III) separated off in this case is processed together with the brown coal fly ash arising in further electrostatic precipitator stages.

8. Process according to one of Claims 1 to 7, characterized in that the coarse fraction and/or fine fraction (II, IV) essentially freed from coal particles, coke particles and wood particles is processed together with lime and/or cement with pressing of moulded articles and autoclaving of the moulded articles to give calcium hydrosilicate-bonded moulded articles.

9. Process according to one of Claims 1 to 7, characterized in that the coarse fraction and/or fine fraction (II, IV) essentially freed from coal particles, coke particles and wood particles are ground together with lime or hydrated lime and/or cement and a prefabricated foam or a pore-forming agent with autoclaving to give moulded articles of cellular-expanded concrete or calcium hydrosilicate-bonded moulded articles having pores.

10. Process according to Claim 9, characterized in that inherently stable green bricks are produced by adding a heat-activatable rapid bonder leading to solidification and passing through the raw mixture formed through a continuous extrusion unit heating the raw mixture and then dividing the column.

11. Process according to one of Claims 8 to 10, characterized in that the composition to be shaped, formed with the coarse fraction and/or fine fraction (II, IV) is coloured with a mineral colouring additive, preferably in an amount of 1 to 5% by weight.

12. Process according to one of Claims 1 to 7, characterized in that the fine fraction (IV), essentially freed from coal particles, coke particles and wood particles, is used as fine sand for mortars, plasters, concretes or as casting sand.

13. Process according to one of Claims 1 to 7, characterized in that the remaining fraction (I) and/or the very fine fraction (III), if required after mechanical removal of the coal particles, coke particles and wood particles, after wetting with about 5 to 7% by weight of moisture and mixing with additives necessary for the production of brickworks products, is shaped by pressing to give moulded articles which are fired.

14. Process according to one of Claims 1 to 7, characterized in that the mixture produced from the remaining fraction (I) and/or the very fine fraction (III) and from additives necessary for the production of brickworks products is made porous with prefabricated foam, from which, using a heat-activatable rapid bonder leading to solidification, a column is produced in a heatable continuous extrusion unit, which column is divided into inherently stable green bricks which are fired.

15. Process according to Claim 13 or 14, characterized in that ground waste glass in an amount of up to about 10% by weight is added to the mixture produced from the remaining fraction (I) and/or the very fine fraction (III) and the additives.

16. Process according to one of Claims 1 to 7, characterized in that the remaining fraction (I) and/or the very fine fraction (III), after removing the coal constituents, coke constituents and wood constituents, is used as an additive with pozzolanic effect in lime- and Portland cement-containing matrices.

## Revendications

1. Procédé pour valoriser des cendres de lignite, en particulier des cendres sèches d'électrofiltres, afin d'obtenir des matériaux de construction, caractérisé en ce qu'une fraction de grosses (II) de limite granulométrique inférieure comprise dans une plage d'environ 200 micromètres à 500 micromètres est d'abord séparée par un procédé mécanique, la fraction restante (I) de limite granulométrique supérieure correspondante, ou encore sa fraction de plus fines (III) de limite granulométrique supérieure comprise dans une plage d'environ 40 à 100 micromètres, ladite fraction de plus fines étant séparée mécaniquement d'une fraction de fines (IV) contenant essentiellement du sable quartzeux fin, étant employée pour la fabrication de produits de briquetterie, tandis que la fraction de fines (IV) est utilisée pour fabriquer des matériaux de construction nécessitant du sable quartzeux, au moins la plus grande partie des particules de charbon, de coke et de bois, encore contenue dans lesdites fractions (I,III,IV) ainsi utilisées, étant éventuellement éliminée par un procédé mécanique.

2. Procédé selon la revendication 1, caractérisé en ce que la fraction de grosses, la fraction de fines et/ou la fraction de plus fines (I,II,III,IV) sont préparées par criblage.

3. Procédé selon la revendication 1 ou 2, caractérisé en ce que la fraction de fines et la fraction de plus fines (III,IV) sont séparées l'une de l'autre par triage.

4. Procédé selon l'une des revendications 1 à 3, caractérisé en ce que les particules de charbon, de coke et de bois sont séparées par triage.

5. Procédé selon l'une des revendications 1 à 4, caractérisé en ce que la fraction de grosses (II) est séparée avec une limite granulométrique inférieure environ supérieure à 350 micromètres, en particulier environ supérieure à 200 à 250 micromètres.

6. Procédé selon l'une des revendications 1 à 5, caractérisé en ce que la fraction de plus fines (III) est séparée avec une limite granulométrique supérieure d'environ 40 à 70 micromètres.

7. Procédé selon l'une des revendications 1 à 6, caractérisé en ce que les cendres volantes de lignite provenant d'un premier étage d'électrofiltration sont soumises à la séparation, la fraction de plus fines (III) ainsi séparée étant traitée avec les cendres volantes de lignite obtenues dans d'autres étages de l'électrofiltration.

8. Procédé selon l'une des revendications 1 à 7, caractérisé en ce que la fraction de grosses et/ou la fraction de fines (II,IV), sensiblement débarrassée des particules de charbon, de coke et de bois, est traitée avec de la chaux et/ou du ciment par compression dans des moules et autoclavage des moules en sorte d'obtenir des objets moulés liés par l'hydrosilicate de calcium.

9. Procédé selon l'une des revendications 1 à 7, caractérisé en ce que la fraction de grosses et/ou la fraction de fines (II,IV), sensiblement débarrassée des particules de charbon, de coke et de bois, après broyage avec de la chaux ou de l'hydrate de chaux et/ou du ciment et une mousse préfabriquée ou un agent porogène, est traitée par autoclavage en sorte d'obtenir des objets moulés en béton poreux, ou des objets moulés poreux liés par l'hydrosilicate de calcium.

10. Procédé selon la revendication 9, caractérisé en ce qu'on forme des ébauches stables par ajout et mélange d'un liant à prise rapide activable par la chaleur et conduisant à une solidification, et par passage du mélange brut ainsi formé à travers une installation d'extrusion en bande qui chauffe le mélange brut et, enfin, par séparation de l'extrudat.

11. Procédé selon l'une des revendications 8 à 10, caractérisé en ce que la composition à mouler, formée avec la fraction de grosses et/ou la fraction de fines (II,IV), est colorée dans la masse avec un additif colorant minéral, de préférence en une quantité de 1 à 5 % en poids.

12. Procédé selon l'une des revendications 1 à 7, caractérisé en ce que la fraction de fines (IV), sensiblement débarrassée des particules de charbon, de coke et de bois, est utilisée comme sable fin pour des mortiers, enduits, bétons ou encore comme sable de fonderie.

13. Procédé selon l'une des revendications 1 à 7, caractérisé en ce que la fraction restante (I) et/ou la fraction de plus fines (III), éventuellement après élimination mécanique des particules de charbon, de coke et de bois, est, après humidification avec environ 5 à 7 % en poids d'humidité et mélange aux additifs nécessaires à la fabrication de produits de briqueterie, moulée par compression en des objets moulés, lesquels sont soumis à cuisson.

14. Procédé selon l'une des revendications 1 à 7, caractérisé en ce que le mélange fabriqué à partir de la fraction restante (I) et/ou de la fraction de plus fines (III) et des additifs nécessaires à la fabrication de produits de briqueterie, est rendu poreux au moyen d'un mousse préfabriquée, à partir de quoi, à l'aide d'un liant à prise rapide activable par la chaleur et conduisant à une solidification, on fabrique ensuite un extrudat dans une installation chauffable d'extrusion en bande, ledit extrudat étant subdivisé en ébauches stables qui sont soumises à une cuisson.

15. Procédé selon la revendication 13 ou 14, caractérisé en ce que l'on ajoute du verre perdu broyé au mélange fabriqué à partir de la fraction restante (I) et/ou de la fraction de plus fines (III) ainsi que des additifs, ledit verre perdu étant ajouté en une quantité allant jusqu'à environ 10 % en poids.

16. Procédé selon l'une des revendications 1 à 7, caractérisé en ce que la fraction restante (I) et/ou la fraction de plus fines (III) est, après élimination des particules de charbon, de coke et de bois, utilisée comme additif à effet pouzzolanique dans des liants contenant de la chaux et du ciment Portland.
